(19) Europäisches Patentamt
European Patent Office
Office européen des brevets

(11) **EP 4 262 135 A1**

(12) **EUROPEAN PATENT APPLICATION**

(43) Date of publication:
**18.10.2023 Bulletin 2023/42**

(21) Application number: **23168141.2**

(22) Date of filing: **15.04.2023**

(51) International Patent Classification (IPC):
**H04L 9/00** $^{(2022.01)}$    **G06F 21/60** $^{(2013.01)}$
**H04L 9/40** $^{(2022.01)}$

(52) Cooperative Patent Classification (CPC):
**G06F 21/602; H04L 9/008; H04L 63/0428**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 CN 202210396029**

(71) Applicant: **Alipay (Hangzhou) Information Technology Co., Ltd.
Hangzhou, Zhejiang 310000 (CN)**

(72) Inventors:
• **LU, Yufei
Hangzhou, Zhejiang, 310000 (CN)**

• **YU, Chaofan
Hangzhou, Zhejiang, 310000 (CN)**
• **WANG, Lei
Hangzhou, Zhejiang, 310000 (CN)**
• **ZHOU, Jingren
Hangzhou, Zhejiang, 310000 (CN)**

(74) Representative: **Fish & Richardson P.C.
Highlight Business Towers
Mies-van-der-Rohe-Straße 8
80807 München (DE)**

Remarks:
Claims filed after the date of filing of the application (Rule 68(4) EPC).

(54) **BATCH ENCRYPTION METHODS, RELATED APPARATUSES, SYSTEMS, DEVICES, MEDIUMS, AND PROGRAM PRODUCTS**

(57) Embodiments of this specification disclose a batch encryption method, a related apparatus, a system, a device, a medium, and a program product. The method includes the following: N first plaintexts are obtained, and a first target plaintext obtained by splicing the N first plaintexts based on a first predetermined rule is encrypted by using a predetermined encryption algorithm, thereby obtaining a first target ciphertext including the N first plaintexts. N is a positive integer greater than or equal to 2.

FIG. 6

## Description

## TECHNICAL FIELD

This specification relates to the field of computer technologies, and in particular, to batch encryption methods, related apparatuses, systems, devices, mediums, and program products.

## BACKGROUND

Okamoto-Uchiyama (OU) is an addition homomorphic encryption algorithm that allows people to perform an addition operation on a ciphertext and obtain a result that is still encrypted. A result obtained by decrypting the ciphertext is the same as a result obtained by performing the same operation on a plaintext. OU is an excellent cryptographic technology, and is widely used in multi-party secure computing. When a user encrypts a plurality of plaintexts by using OU, only one plaintext can be encrypted at one time. Therefore, many ciphertexts are obtained through encryption.

## SUMMARY

Embodiments of this specification provide batch encryption methods, related apparatuses, systems, devices, mediums, and program products, so that a plurality of plaintexts can be encrypted at one time, encryption efficiency can be improved, a quantity of ciphertexts and traffic transmitted in a network can be significantly reduced, and vectorization calculation is further supported, thereby reducing a quantity of calculation times. The technical solutions are as follows:

According to a first aspect, one or more embodiments of this specification provide a batch encryption method, including the following:

N first plaintexts are obtained, where N is a positive integer greater than or equal to 2; the N first plaintexts are spliced based on a first predetermined rule to obtain a first target plaintext; and the first target plaintext is encrypted by using a predetermined encryption algorithm to obtain a first target ciphertext.

In a possible implementation, the N first plaintexts include signed integers; after the obtaining N first plaintexts, and before the splicing the N first plaintexts based on a first predetermined rule to obtain a target first plaintext, the method further includes the following: first plaintexts being the signed integers are converted into corresponding complements; and the splicing the N first plaintexts based on a first predetermined rule to obtain a first target plaintext includes the following: the complements corresponding to the signed integers in the N first plaintexts are spliced based on the first predetermined rule to obtain the first target plaintext.

In a possible implementation, the N first plaintexts further include unsigned integers; and the splicing the N first plaintexts based on a first predetermined rule to obtain a first target plaintext includes the following: the complements corresponding to the signed integers in the N first plaintexts and the unsigned integers are spliced based on the first predetermined rule to obtain the first target plaintext.

In a possible implementation, the splicing the N first plaintexts based on a first predetermined rule to obtain a first target plaintext includes the following: the N first plaintexts are spliced based on a predetermined sequence to obtain the first target plaintext.

In a possible implementation, the first target plaintext includes the N first plaintexts and a predetermined gap between every two adjacent first plaintexts in the N first plaintexts, the predetermined gap includes d bits of predetermined numbers, and d is a positive integer.

In a possible implementation, all first plaintexts in the N first plaintexts have a same size.

In a possible implementation, the method is applied to a first terminal, and the predetermined encryption algorithm is an addition homomorphic encryption algorithm; and the method further includes the following: M groups of second plaintexts are obtained, where M is a positive integer, each of the M groups of second plaintexts includes N second plaintexts, and the N second plaintexts are in one-to-one correspondence with the N first plaintexts; each group of the second plaintexts is spliced based on the first predetermined rule to obtain M second target plaintexts; the M second target plaintexts are encrypted by using the predetermined encryption algorithm to obtain M second target ciphertexts; the first target ciphertext and the M second target ciphertexts are sent to a second terminal; a third target ciphertext returned by the second terminal is received, where the third target ciphertext is a result of adding the first target ciphertext and the M second target ciphertexts; the third target ciphertext is decrypted to obtain a third target plaintext; and the third target plaintext is intercepted based on a second predetermined rule to obtain N results of correspondingly adding the N first plaintexts and the M groups of second plaintexts.

According to a second aspect, one or more embodiments of this specification provide another batch encryption method, applied to a second terminal, and including the following: a first target ciphertext and M second target ciphertexts that are sent by a first terminal are received, where the first target ciphertext includes N first plaintexts, N is a positive integer greater than or equal to 2, the M second target ciphertexts include M groups of second plaintexts, M is a positive integer, each of the M groups of second plaintexts includes N second plaintexts, and the N second plaintexts are in one-to-one correspondence with the N first plaintexts; the first target ciphertext and the M second target ciphertexts are added to obtain a third target ciphertext, where the third target ciphertext is a result of adding the first target ciphertext and the M second target ciphertexts; and the third target ciphertext is sent to the first terminal.

According to a third aspect, one or more embodiments of this specification provide a first terminal, where the first terminal includes the following: a first acquisition module, configured to obtain N first plaintexts, where N is a positive integer greater than or equal to 2; a first splicing module, configured to splice the N first plaintexts based on a first predetermined rule to obtain a first target plaintext; and a first encryption module, configured to encrypt the first target plaintext by using a predetermined encryption algorithm to obtain a first target ciphertext.

In a possible implementation, the N first plaintexts include signed integers; the first terminal further includes the following: a conversion module, configured to convert first plaintexts being the signed integers into corresponding complements; and the first splicing module is specifically configured to splice the complements corresponding to the signed integers in the N first plaintexts based on the first predetermined rule to obtain the first target plaintext.

In a possible implementation, the N first plaintexts further include unsigned integers; and the first splicing module is specifically configured to splice the complements corresponding to the signed integers in the N first plaintexts and the unsigned integers based on the first predetermined rule to obtain the first target plaintext.

In a possible implementation, the first splicing module is specifically configured to splice the N first plaintexts based on a predetermined sequence to obtain the first target plaintext.

In a possible implementation, the first target plaintext includes the N first plaintexts and a predetermined gap between every two adjacent first plaintexts in the N first plaintexts, the predetermined gap includes d bits of predetermined numbers, and d is a positive integer.

In a possible implementation, all first plaintexts in the N first plaintexts have a same size.

In a possible implementation, the predetermined encryption algorithm is an addition homomorphic encryption algorithm; and the first terminal further includes the following: a second acquisition module, configured to obtain M groups of second plaintexts, where M is a positive integer, each of the M groups of second plaintexts includes N second plaintexts, and the N second plaintexts are in one-to-one correspondence with the N first plaintexts; a second splicing module, configured to splice each group of the second plaintexts based on the first predetermined rule to obtain M second target plaintexts; a second encryption module, configured to encrypt the M second target plaintexts by using the predetermined encryption algorithm to obtain M second target ciphertexts; a first sending module, configured to send the first target ciphertext and the M second target ciphertexts to a second terminal; a first receiving module, configured to receive a third target ciphertext returned by the second terminal, where the third target ciphertext is a result of adding the first target ciphertext and the M second target ciphertexts; a decryption module, configured to decrypt the third target ciphertext to obtain a third target plaintext; and an interception module, configured to intercept the third target plaintext based on a second predetermined rule to obtain N results of correspondingly adding the N first plaintexts and the M groups of second plaintexts.

According to a fourth aspect, one or more embodiments of this specification provide a second terminal, where the second terminal includes the following: a second receiving module, configured to receive a first target ciphertext and M second target ciphertexts that are sent by a first terminal, where the first target ciphertext includes N first plaintexts, N is a positive integer greater than or equal to 2, the M second target ciphertexts include M groups of second plaintexts, M is a positive integer, each of the M groups of second plaintexts includes N second plaintexts, and the N second plaintexts are in one-to-one correspondence with the N first plaintexts; a calculation module, configured to add the first target ciphertext and the M second target ciphertexts to obtain a third target ciphertext, where the third target ciphertext is a result of adding the first target ciphertext and the M second target ciphertexts; and a second sending module, configured to send the third target ciphertext to the first terminal.

According to a fifth aspect, one or more embodiments of this specification provide a batch encryption system, where the system includes the first terminal according to the third aspect and the second terminal according to the fourth aspect.

According to a sixth aspect, one or more embodiments of this specification provide an electronic device, including a processor and a memory.

The processor is connected to the memory.

The memory is configured to store executable program code.

The processor runs a program corresponding to the executable program code by reading the executable program code stored in the memory, to perform the methods provided in the first aspect, the second aspect, or any one of the possible implementations of the first aspect of the embodiments of this specification.

According to a seventh aspect, one or more embodiments of this specification provide a computer storage medium, where the computer storage medium stores a plurality of instructions, and the instructions are used by a processor to load and perform the steps of the methods provided in the first aspect, the second aspect, or any one of the possible implementations of the first aspect of the embodiments of this specification.

According to an eighth aspect, one or more embodiments of this specification provide a computer program product including instructions, where when the computer program product runs on a computer or a processor, the computer or the processor is enabled to perform the batch encryption method provided in the first aspect, the second aspect, or any one of the possible implementations of the first aspect of the embodiments of this specification.

In the embodiments of this specification, the N first plaintexts that need to be encrypted can be spliced based on the first predetermined rule to obtain the first target plaintext, and the first target plaintext is encrypted by using the predetermined encryption algorithm to obtain the first target ciphertext, where N is a positive integer greater than or equal to 2. As such, a plurality of plaintexts are encrypted at one time, that is, batch encryption is implemented, thereby improving encryption efficiency. When the first terminal expects the second terminal to perform an addition operation on a plurality of groups of plaintexts, the first terminal can encrypt the plurality of groups of plaintexts based on the previous process, and send a plurality of corresponding target ciphertexts to the second terminal. Each group of plaintexts includes N target plaintexts. As such, a quantity of ciphertexts and traffic transmitted in a network are significantly reduced. After receiving the plurality of target ciphertexts, the second terminal can perform an addition operation on the plurality of target ciphertexts, and return, to the first terminal, a finally obtained ciphertext including the sum of the plurality of target ciphertexts. As such, while privacy and security of user data are ensured, vectorization calculation is further supported, thereby reducing a quantity of calculation times, improving calculation efficiency, further reducing the quantity of ciphertexts and traffic transmitted in the network, and improving network transmission efficiency.

**BRIEF DESCRIPTION OF DRAWINGS**

To describe the technical solutions in the embodiments of this specification more clearly, the following briefly describes the accompanying drawings needed in the embodiments. Clearly, the accompanying drawings in the following description show merely some embodiments of this specification, and a person of ordinary skill in the art can still derive other drawings from these accompanying drawings without creative efforts.

FIG. 1 is a schematic architectural diagram illustrating a batch encryption system, according to one or more embodiments of this specification;
FIG. 2 is a schematic flowchart illustrating a batch encryption method, according to one or more embodiments of this specification;
FIG. 3A is a schematic diagram illustrating a splicing process, according to one or more embodiments of this specification;
FIG. 3B is a schematic diagram illustrating another splicing process, according to one or more embodiments of this specification;
FIG. 4 is a schematic diagram illustrating a maximum value of N, according to one or more embodiments of this specification;
FIG. 5A is a schematic diagram illustrating a process of splicing signed integers, according to one or more embodiments of this specification;
FIG. 5B is a schematic diagram illustrating a process of splicing unsigned integers, according to one or more embodiments of this specification;
FIG. 6 is a schematic flowchart illustrating another batch encryption method, according to one or more embodiments of this specification;
FIG. 7 is a schematic diagram illustrating N first plaintexts and M groups of second plaintexts, according to one or more embodiments of this specification;
FIG. 8 is a schematic diagram illustrating a process of intercepting a result, according to one or more embodiments of this specification;
FIG. 9 is a schematic structural diagram illustrating a first terminal, according to one or more embodiments of this specification;
FIG. 10 is a schematic structural diagram illustrating a second terminal, according to one or more embodiments of this specification; and
FIG. 11 is a schematic structural diagram illustrating an electronic device, according to one or more embodiments of this specification.

**DESCRIPTION OF EMBODIMENTS**

The following clearly and comprehensively describes the technical solutions in the embodiments of this specification with reference to the accompanying drawings in the embodiments of this specification.

The terms such as "first", "second", and "third" in this specification, claims, and accompanying drawings are intended to distinguish between different objects, but do not describe a specific order. Furthermore, the terms "include" and "have" and any other variants are intended to cover the non-exclusive inclusion. For example, a process, method, system, product, or device that includes a series of steps or units is not limited to the listed steps or units, but optionally further includes steps or units that are not listed, or optionally further includes other steps or units inherent to such process, method, product, or device.

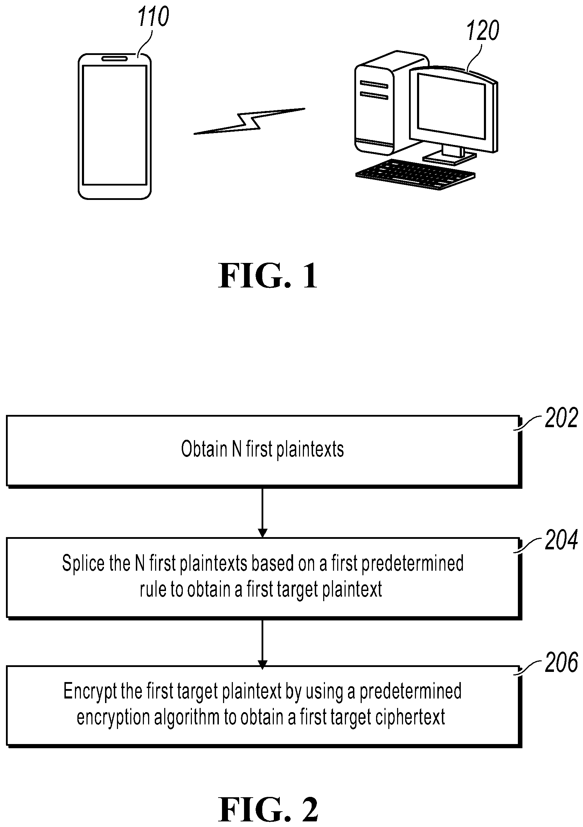

FIG. 1 is a schematic architectural diagram illustrating a batch encryption system, according to one or more embodiments of this specification. As shown in FIG. 1, the batch encryption system can include a first terminal 110 and a second terminal 120.

The first terminal 110 can be a first user device, and can specifically include one or more first user devices. A first user corresponding to the first terminal can be a user providing a plaintext (data) that needs to be encrypted. Software of a first user version can be installed in the first terminal 110 for functions such as obtaining a plaintext and encrypting a plaintext. The first terminal 110 can establish a data connection relationship with the second terminal 120 through a network, for example, send a first target ciphertext and M second target ciphertexts to the second terminal 120, and receive a third target ciphertext (the third target ciphertext is a result of adding the first target ciphertext and the M second target ciphertexts) returned by the second terminal 120. The first terminal 110 can be, but is not limited to, devices such as a mobile phone, a tablet computer, or a notebook computer that the software of the first user version is installed in.

The second terminal 120 can be a second user device, and can specifically include one or more second user devices. A second user corresponding to the second terminal can be a user who performs specific calculation for the ciphertext provided by the first user. Software of a second user version can be installed in the second terminal 120 for functions such as receiving the first target ciphertext and the M second target ciphertexts, and adding the first target ciphertext and the M second target ciphertexts that are provided by the first terminal 110. The second terminal 120 can establish a data connection relationship with the first terminal 110 through the network, for example, receive the first target ciphertext and the M second target ciphertexts that are sent by the first terminal 110, and send the third target ciphertext (the third target ciphertext is a result of adding the first target ciphertext and the M second target ciphertexts that are provided by the first terminal 110) to the first terminal 110. The second terminal 120 can be, but is not limited to, devices such as a mobile phone, a tablet computer, or a notebook computer that the software of the second user version is installed in.

The network can be a medium providing a communication link between any two user devices in the second terminal 120 and the first terminal 110, or can be an Internet including a network device and a transmission medium. No limitation is imposed here. The transmission medium can be a wired link (for example, but not limited to, a coaxial cable, an optical fiber, or a digital subscriber line (DSL)) or a wireless link (for example, but not limited to, wireless fidelity (Wi-Fi), Bluetooth, or a mobile device network).

It can be understood that a quantity of first terminals 110 and a quantity of second terminals 120 in the batch encryption system shown in FIG. 1 are only examples. In a specific implementation, any quantity of first terminals 110 and any quantity of second terminals 120 can be included in the batch encryption system. No specific limitation is imposed in the embodiments of this specification. For example, the first terminal 110 can be a first terminal cluster including a plurality of first terminals, and the second terminal 120 can be a second terminal cluster including a plurality of second terminals.

A conventional encryption algorithm can be used to encrypt only one plaintext at one time, and a size of a plaintext that can be encrypted in one ciphertext is much larger than a size of one plaintext that actually needs to be encrypted. In multi-party secure computing, there are usually many plaintexts. If only one plaintext can be encrypted at one time, a large amount of space in the ciphertext that can be used to encrypt the plaintext is wasted, and an obtained amount of ciphertext data is very large. Consequently, both network transmission efficiency and terminal calculation efficiency of these ciphertexts are low. To alleviate the previous problem, with reference to FIG. 1, the following describes a batch encryption method provided in one or more embodiments of this specification. For details, references can be made to FIG. 2. FIG. 2 is a schematic flowchart illustrating a batch encryption method, according to one or more embodiments of this specification. As shown in FIG. 2, the batch encryption method includes the following steps:

Step 202. Obtain N first plaintexts.

Specifically, a first terminal 110 can receive the N plaintexts input by a first user, or obtain the N plaintexts from a database. N is a positive integer greater than or equal to 2. All first plaintexts in the N first plaintexts have a same size. The size of the first plaintext can be 64 bits, 32 bits, 16 bits, etc. No limitation is imposed in this specification.

Optionally, the first terminal 110 can obtain N first plaintexts of different sizes. A size of the largest first plaintext in the N first plaintexts of different sizes is equal to a predetermined size. The predetermined size can be 64 bits, 32 bits, 16 bits, etc. No limitation is imposed in this specification. After obtaining the N first plaintexts of different sizes, the first terminal 110 can fill, with 0, a high-order bit of a first plaintext with a size less than the predetermined size in the N first plaintexts of different sizes, until the sizes of the N first plaintexts are all the predetermined size.

For example, N=2, that is, the first terminal 110 can obtain a 64-bit first plaintext 1 "da39a3ee5e6b4b0d" (hexadecimal representation) and a 32-bit first plaintext 2 "f9560189" (hexadecimal representation). It can be seen from the previous description that, sizes of the two first plaintexts obtained by the first terminal 110 are different, and the size of the first plaintext 1 is the predetermined size (64 bits). In this case, after obtaining the two first plaintexts, the terminal 110 can further fill, with 0, a high-order bit of the first plaintext 2 with a size less than the predetermined size (64 bits) in the two first plaintexts, until the size of the first plaintext 2 is the predetermined size (64 bits). In this case, a 64-bit first plaintext 2 filled with 0 is "00000000f9560189" (hexadecimal representation).

Step 204. Splice the N first plaintexts based on a first predetermined rule to obtain a first target plaintext.

Specifically, the N first plaintexts can be spliced based on a predetermined sequence to obtain the first target plaintext. The predetermined sequence can be a descending order or an ascending order of the N first plaintexts, or can be a sequence of inputting the N first plaintexts by the first user, etc. No limitation is imposed in this specification.

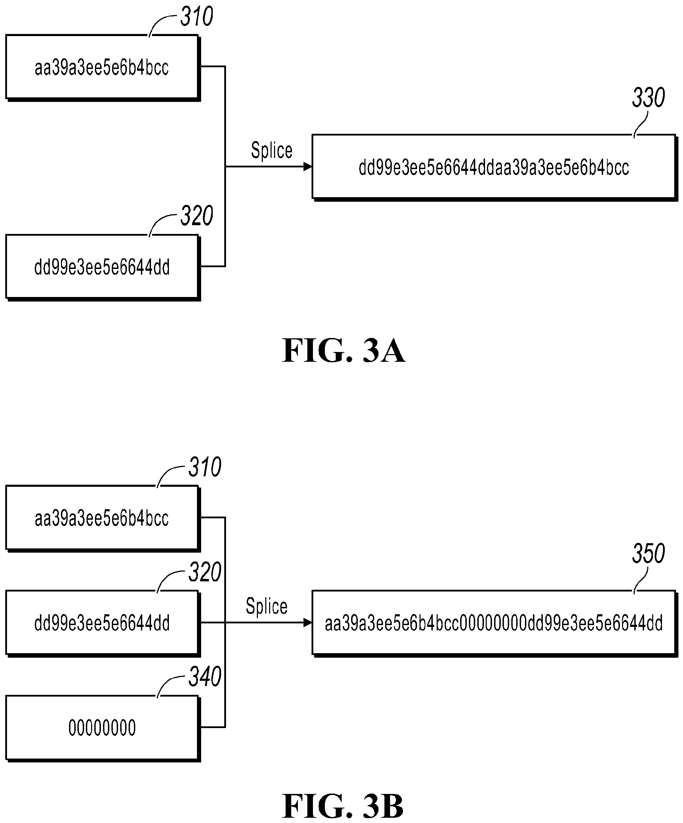

For example, N=2. As shown in FIG. 3A, when the first terminal 110 obtains a 64-bit first plaintext 310 "aa39a3ee5e6b4bcc" (hexadecimal representation) and a 64-bit first plaintext 320 "dd99e3ee5e6644dd" (hexadecimal representation), if the predetermined sequence is that the first plaintext 320 comes before the first plaintext 310, the first plaintext 320 and the first plaintext 310 in FIG. 3A can be spliced based on the predetermined sequence to obtain a first target plaintext 330 "dd99e3ee5e6644ddaa39a3ee5e6b4bcc" shown in FIG. 3A.

Optionally, to prevent an integer at a low-order bit position from overflowing in an addition operation and affecting correctness of an integer at an adjacent high-order bit position, a predetermined gap can be inserted between every two adjacent first plaintexts in the N first plaintexts, and the N first plaintexts and the inserted predetermined gap are spliced to obtain the first target plaintext. That is, the first target plaintext includes the N first plaintexts and the predetermined gap between every two adjacent first plaintexts in the N first plaintexts. The predetermined gap includes d bits of predetermined numbers, and d is a positive integer. The above-mentioned d can be 8, 16, 32, etc. No limitation is imposed in this specification. The predetermined number can be 0, 1, etc. No limitation is imposed in this specification. If the size of the plaintext is p bits (bit), the predetermined gap is d bits, and a maximum size of a plaintext that can be encrypted in one ciphertext is k bits, a maximum of

$$\lfloor (k+d)/(p+d) \rfloor$$

plaintexts can be encrypted in one time of batch encryption, that is, a maximum value of N is $\lfloor (k+d)/(p+d) \rfloor$. The symbol $\lfloor \ \rfloor$ represents rounding down.

For example, N=2. As shown in FIG. 3B, when the first terminal 110 obtains a 64-bit first plaintext 310 "aa39a3ee5e6b4bcc" (hexadecimal representation) and a 64-bit first plaintext 320 "dd99e3ee5e6644dd" (hexadecimal representation), if a predetermined gap 340 is "00000000" (hexadecimal representation), that is, a size of the predetermined gap 340 is 32 bits and the predetermined gap 340 includes the number 0, the first plaintext 310, the predetermined gap 340, and the first plaintext 320 can be spliced to obtain a first target plaintext 350 "aa39a3ee5e6b4bcc00000000dd99e3ee5e6644d".

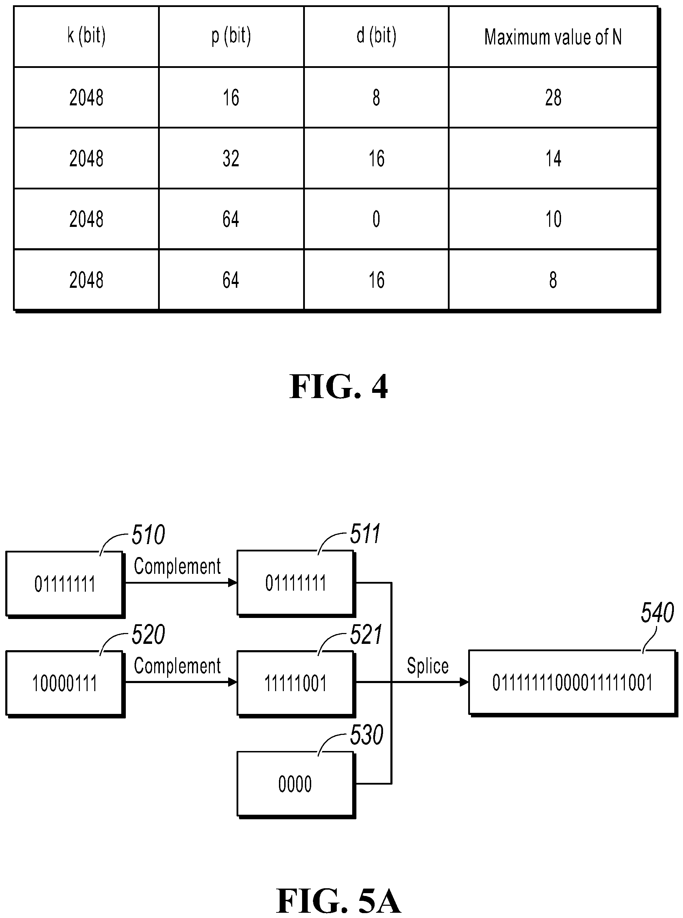

For example, as shown in FIG. 4, when a maximum size of a plaintext that can be encrypted in one ciphertext is 2048 bits, the size of each first plaintext in the N first plaintext is 16 bits, and the size of the predetermined gap is 8 bits, a maximum of 28 first plaintexts can be encrypted in one time of batch encryption, that is, N is a positive integer greater than or equal to 2 and less than or equal to 28. When a maximum size of a plaintext that can be encrypted in one ciphertext is 2048 bits, the size of each first plaintext in the N first plaintexts is 32 bits, and the size of the predetermined gap is 16 bits, a maximum of 14 first plaintexts can be encrypted in one time of batch encryption, that is, N is a positive integer greater than or equal to 2 and less than or equal to 14. When a maximum size of a plaintext that can be encrypted in one ciphertext is 2048 bits, the size of each first plaintext in the N first plaintexts is 64 bits, and the size of the predetermined gap is 0 bits, a maximum of 10 first plaintexts can be encrypted in one time of batch encryption, that is, N is a positive integer greater than or equal to 2 and less than or equal to 10. When a maximum size of a plaintext that can be encrypted in one ciphertext is 2048 bits, the size of each first plaintext in the N first plaintexts is 64 bits, and the size of the predetermined gap is 16 bits, a maximum of 8 first plaintexts can be encrypted in one time of batch encryption, that is, N is a positive integer greater than or equal to 2 and less than or equal to 8.

Optionally, the N first plaintexts include signed integers. When an integer is represented in binary, the leftmost digit indicating whether the integer is a positive integer or a negative integer is a signed integer. The signed integer includes a positive integer and a negative integer. Before the N first plaintexts are spliced based on the first predetermined rule to obtain the target first plaintext, first plaintexts being the signed integers can be converted into corresponding complements first, that is, negative integers in the N first plaintexts are converted into corresponding complements, and complements corresponding to positive integers in the N first plaintexts are the same as sign-magnitude representation, so that no conversion is needed. Then, the complements corresponding to the signed integers in the N first plaintexts are spliced based on the first predetermined rule to obtain the first target plaintext. The first target plaintext includes the N first plaintexts and the predetermined gap between every two adjacent first plaintexts in the N first plaintexts. The predetermined gap includes d bits of predetermined numbers, and d is a positive integer. The above-mentioned d can be 8, 16, 32, etc., or the above-mentioned d can be 0, that is, the size of the predetermined gap inserted between every two adjacent first plaintexts is 0. This is equivalent to that the N plaintexts are directly spliced without inserting the predetermined gap. No limitation is imposed in this specification. The predetermined number can be 0, 1, etc. No limitation is imposed in this specification.

For example, N=2. As shown in FIG. 5A, when the first terminal 110 obtains an 8-bit first plaintext 510 "01111111" (binary representation) and an 8-bit first plaintext 520 "10000111" (binary representation), if both the first plaintext 510 and the first plaintext 520 are signed integers, the first plaintext 510 is a positive integer, and the second plaintext is a negative integer. First, the first plaintext 510 being the signed positive integer can be converted into a corresponding complement 511 "01111111" (binary representation), and the first plaintext 520 being the signed negative integer can be converted into a corresponding complement 521 "11111001" (binary representation). Then, the complements corresponding to the signed integers in the N first plaintexts are spliced based on the first predetermined rule, that is, a predetermined gap 530 including a 4-bit predetermined number "0" is inserted between the complement 511 and the complement 521, and splicing is performed to obtain a first target plaintext 540 "01111111000011111001" shown in FIG. 5A.

Optionally, the N first plaintexts further include unsigned integers in addition to the signed integers. When an integer is represented in binary, if the leftmost digit is not used to represent a positive number or a negative number, but is joined with the following digits to represent an integer, the integer is an unsigned integer. The unsigned integer can only be a positive number. The complements corresponding to the signed integers in the N first plaintexts and the unsigned integers can be spliced based on the first predetermined rule to obtain the first target plaintext. The first target plaintext includes the N first plaintexts and the predetermined gap between every two adjacent first plaintexts in the N first plaintexts. The predetermined gap includes d bits of predetermined numbers, and d is a positive integer. The above-mentioned d can be 8, 16, 32, etc., or the above-mentioned d can be 0, that is, the predetermined gap is not inserted between every two adjacent first plaintexts or the size of the predetermined gap inserted between every two adjacent first plaintexts is 0, that is, the N plaintexts are directly spliced. No limitation is imposed in this specification. The predetermined number can be 0, 1, etc. No limitation is imposed in this specification.

Optionally, the N first plaintexts can include only unsigned integers. When an integer is represented in binary, if the leftmost digit is not used to represent a positive number or a negative number, but is joined with the following digits to represent an integer, the integer is an unsigned integer. The unsigned integer can only be a positive number. The N first plaintexts can be directly spliced based on the first predetermined rule to obtain the first target plaintext. The first target plaintext includes the N first plaintexts and the predetermined gap between every two adjacent first plaintexts in the N first plaintexts. The predetermined gap includes d bits of predetermined numbers, and d is a positive integer. The above-mentioned d can be 8, 16, 32, etc., or the above-mentioned d can be 0, that is, the predetermined gap is not inserted between every two adjacent first plaintexts or the size of the predetermined gap inserted between every two adjacent first plaintexts is 0, that is, the N plaintexts are directly spliced. No limitation is imposed in this specification. The predetermined number can be 0, 1, etc. No limitation is imposed in this specification.

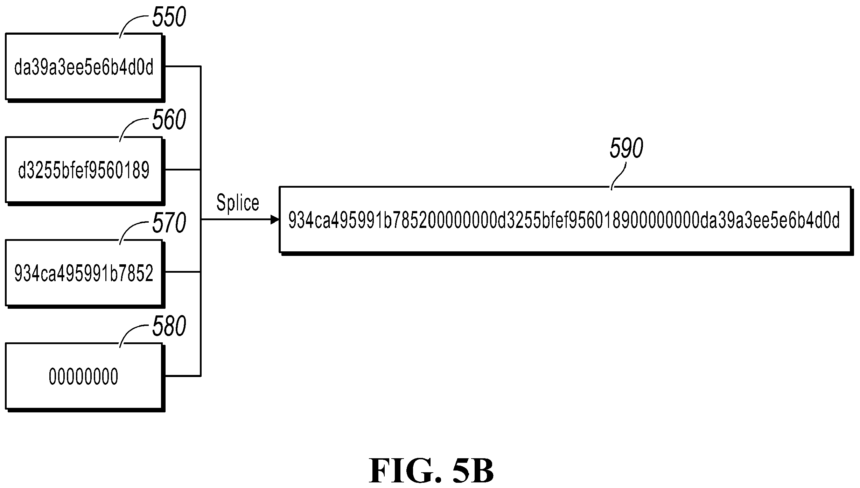

For example, N=3. As shown in FIG. 5B, when the first terminal 110 obtains three 64-bit unsigned integers: a first plaintext 550 "da39a3ee5e6b4b0d" (hexadecimal representation), a first plaintext 560 "d3255bfef9560189" (hexadecimal representation), and a first plaintext 570 "934ca495991b7852" (hexadecimal representation), the first terminal 110 can directly splice the three first plaintexts based on the predetermined sequence, that is, insert a predetermined gap 580 that includes a 16-bit predetermined number "0" between the first plaintext 550 and the first plaintext 560 and between the first plaintext 560 and the first plaintext 570, and perform splicing to obtain a first target plaintext 590 "934ca495991b785200000000d3255bfef95601890000 0000da39a3ee5e6b4b0d" (hexadecimal representation) shown in FIG. 5B.

Step 206. Encrypt the first target plaintext by using a predetermined encryption algorithm to obtain a first target ciphertext.

Specifically, the first target plaintext obtained by splicing the N plaintexts can be encrypted by using the predetermined encryption algorithm to obtain the first target ciphertext. The first target ciphertext includes the N plaintexts. The predetermined encryption algorithm includes an addition homomorphic encryption algorithm such as an Okamoto-Uchiyama (OU) encryption algorithm and a Paillier encryption algorithm, a multiplication homomorphic encryption algorithm, etc. No limitation is imposed in this specification. The addition homomorphic encryption algorithm is a homomorphic encryption algorithm that supports addition of ciphertexts. The multiplication homomorphic encryption algorithm is a homomorphic encryption algorithm that supports multiplication of ciphertexts.

In the embodiments of this specification, the N first plaintexts that need to be encrypted are spliced based on the first predetermined rule to obtain the first target plaintext, and the first target plaintext is encrypted by using the predetermined encryption algorithm to obtain the first target ciphertext, where N is a positive integer greater than or equal to 2. As such, a plurality of plaintexts are encrypted at one time, that is, batch encryption is implemented, thereby improving encryption efficiency, significantly reducing a quantity of ciphertexts, and reducing traffic transmitted in a network. In addition, in the embodiments of this specification, the signed integer is first converted into the form of complement, and then splicing is performed, so that batch encryption of the signed integers is implemented.

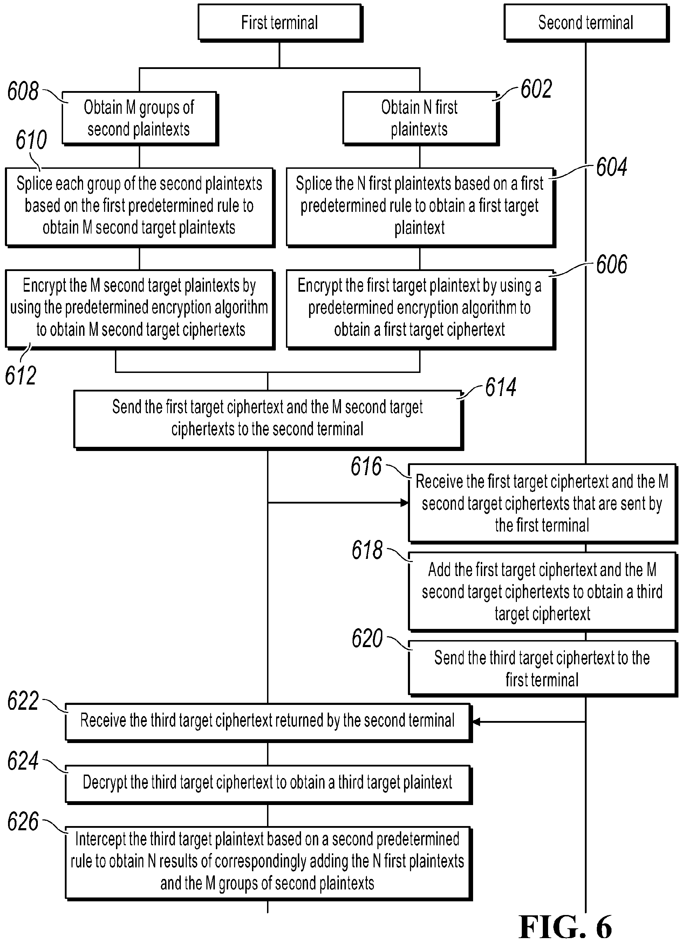

When the predetermined encryption algorithm is an addition homomorphic encryption algorithm, to alleviate problems such as low network transmission efficiency and low terminal calculation efficiency of a conventional addition homomorphic encryption algorithm, with reference to FIG. 6, the following describes another batch encryption method provided in one or more embodiments of this specification. For details, references can be made to FIG. 6. FIG. 6 is a schematic flowchart illustrating another batch encryption method, according to one or more embodiments of this specification. As shown in FIG. 6, the batch encryption method includes the following steps:

Step 602. A first terminal obtains N first plaintexts.

Specifically, step 602 is consistent with step 202, and details are omitted here for simplicity.

Step 604. The first terminal splice the N first plaintexts based on a first predetermined rule to obtain a first target plaintext.

Specifically, step 604 is consistent with step 204, and details are omitted here for simplicity.

Step 606. The first terminal encrypts the first target plaintext by using a predetermined encryption algorithm to obtain a first target ciphertext.

Specifically, step 606 is consistent with step 206, and details are omitted here for simplicity.

Step 608. The first terminal obtains M groups of second plaintexts.

Specifically, the first terminal can receive the M groups of second plaintexts input by a first user, or obtain the M groups of second plaintexts from a database. M is a positive integer. Each of the M groups of second plaintexts includes N second plaintexts. The N second plaintexts are in one-to-one correspondence with the N first plaintexts. N is a positive integer greater than or equal to 2. All second plaintexts in the N second plaintexts have a same size. All first plaintexts in the N first plaintexts also have a same size, and the size of the first plaintext is equal to the size of the second plaintext. The size of the second plaintext can be 64 bits, 32 bits, 16 bits, etc. No limitation is imposed in this specification.

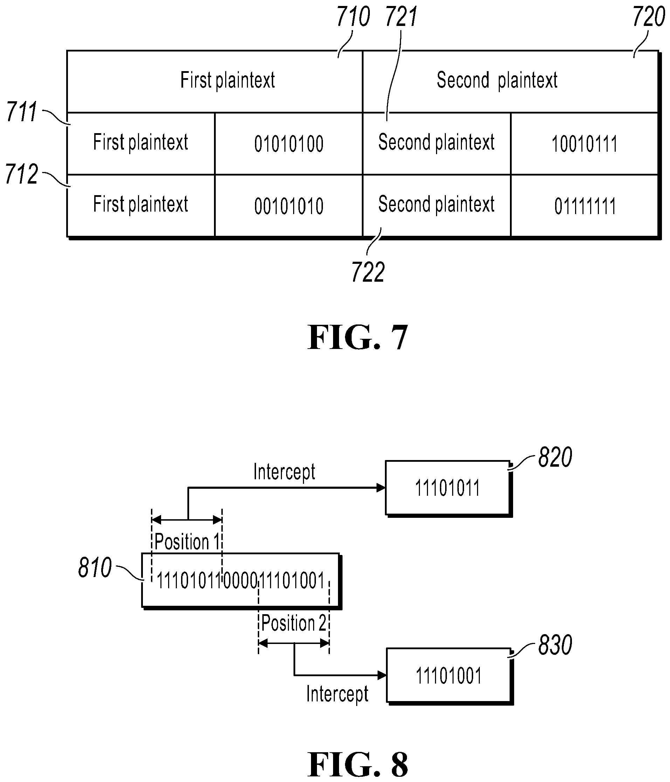

For example, M=1 and N=2. As shown in FIG. 7, the first terminal obtains a group of second plaintexts, the group of second plaintexts 720 includes a second plaintext 721 "10010111" (binary representation) and a second plaintext 722 "01111111" (binary representation), the second plaintext 721 corresponds to a first plaintext 711 "01010100" (binary representation) in two first plaintexts 710 obtained by the first terminal, and the second plaintext 722 corresponds to a first plaintext 712 "00101010" (binary representation) in the two first plaintexts 710 obtained by the first terminal. Sizes of the second plaintext 721, the second plaintext 722, the first plaintext 711, and the first plaintext 712 are all 8 bits.

Step 610. The first terminal splices each group of second plaintext based on the first predetermined rule to obtain M second target plaintexts.

Specifically, the first terminal can splice each group of second plaintexts in the obtained M groups of second plaintexts based on the first predetermined rule to obtain M second target plaintexts. The specific splicing process is consistent with step 204, and details are omitted here for simplicity.

Step 612. The first terminal encrypts the M second target plaintexts by using the predetermined encryption algorithm to obtain M second target ciphertexts.

Specifically, the first terminal can encrypt the M second target plaintexts by using the predetermined encryption algorithm to obtain M second target ciphertexts. Each second target ciphertext includes N second plaintexts. The predetermined encryption algorithm is an addition homomorphic encryption algorithm. The addition homomorphic encryption algorithm is a homomorphic encryption algorithm that supports addition of ciphertexts. The addition homomorphic encryption algorithm includes an OU encryption algorithm and a Paillier encryption algorithm, etc. No limitation is imposed in this specification.

Step 614. The first terminal sends the first target ciphertext and the M second target ciphertexts to a second terminal.

Specifically, after respectively encrypting the N first plaintexts and the M groups of second plaintexts that an addition operation needs to be performed on, to obtain the first target ciphertext and the M second target ciphertexts, the first terminal can send the first target ciphertext and the M second target ciphertexts to the second terminal through a network, and the second terminal performs corresponding addition calculation.

Step 616. The second terminal receives the first target ciphertext and the M second target ciphertexts that are sent by the first terminal.

Specifically, the second terminal can receive, through the network, the first target ciphertext and the M second target ciphertexts that are sent by the first terminal. The first target ciphertext includes N first plaintexts. N is a positive integer greater than or equal to 2. The M second target ciphertexts include M groups of second plaintexts. M is a positive integer. Each of the M groups of second plaintexts includes N second plaintexts. The N second plaintexts are in one-to-one correspondence with the N first plaintexts.

Step 618. The second terminal adds the first target ciphertext and the M second target ciphertexts to obtain a third target ciphertext.

Specifically, after receiving, through the network, the first target ciphertext and the M second target ciphertexts that are sent by the first terminal, the second terminal can perform addition calculation on the first target ciphertext and the M second target ciphertexts, thereby obtaining the third target ciphertext. The third target ciphertext is a result of adding the first target ciphertext and the M second target ciphertexts.

Step 620. The second terminal sends the third target ciphertext to the first terminal.

Specifically, after calculating the sum of the first target ciphertext and the M second target ciphertexts that are sent by the first terminal, the second terminal can send the result obtained through calculation, namely, the third target ciphertext, to the first terminal through the network. Therefore, the N first plaintexts and the N second plaintexts included in each of the M groups of second plaintexts are added in a one-to-one correspondence way without viewing the N first plaintexts and the M groups of second plaintexts that are encrypted by the first terminal, thereby greatly protecting security and privacy of data such as the first plaintext and the second plaintext.

Step 622. The first terminal receives the third target ciphertext returned by the second terminal.

Specifically, the first terminal can receive, through the network, the third target ciphertext returned after the second terminal performs addition calculation on the first target ciphertext and the M second target ciphertexts. The third target ciphertext is a result of adding the first target ciphertext and the M second target ciphertexts.

Step 624. The first terminal decrypts the third target ciphertext to obtain a third target plaintext.

Specifically, after receiving the third target ciphertext obtained by performing addition calculation on the first target ciphertext and the M second target ciphertexts, the first terminal can further decrypt the third target ciphertext by using a predetermined decryption algorithm, thereby obtaining the third target plaintext corresponding to the third target ciphertext. The predetermined decryption algorithm corresponds to the predetermined encryption algorithm. The predetermined decryption algorithm includes an OU decryption algorithm and a Paillier decryption algorithm, etc. No limitation is imposed in this specification.

Step 626. The first terminal intercepts the third target plaintext based on a second predetermined rule to obtain N results of correspondingly adding the N first plaintexts and the M groups of second plaintexts.

Specifically, the first terminal can intercept the third target plaintext based on a predetermined size of the first plaintext and a predetermined gap, to obtain N results corresponding to N predetermined ranges. If the predetermined size of the first plaintext is p bits and the predetermined gap is d bits, the third target plaintext can be intercepted to obtain a first result corresponding to a first predetermined range [0, p), the third target plaintext can be intercepted to obtain a second result corresponding to a second predetermined range [p+d, 2p+d), and so on. The third target plaintext can be intercepted to obtain an Nth result corresponding to an Nth predetermined range [(N-1)(p+d), Np+(N-1)d).

For example, when the third target ciphertext is the sum of the second target ciphertext corresponding to the group of second plaintexts 720 in FIG. 7 and the first target ciphertext corresponding to the two first plaintexts 710 in FIG. 7, if the predetermined gap in each of the first target ciphertext and the second target ciphertext is 4 bits, and includes the number "0," the third target ciphertext can be decrypted to obtain a third target plaintext 810 shown in FIG. 8. In addition, the first terminal can perform interception at a position 1 corresponding to bits [0, 8) in the third target plaintext 810 to obtain a result 820 "11101011" (binary representation) of performing addition calculation on the first plaintext 711 "01010100" (binary representation) and the second plaintext 721 "10010111" (binary representation), and the first terminal can further perform interception at a position 2 corresponding to bits [12, 20) in the third target plaintext 810 to obtain a result 830 "11101001" (binary representation) of performing addition calculation on the first plaintext 712 "00101010" (binary representation) and the second plaintext 722 "01111111" (binary representation).

In the embodiments of this specification, because a size of each target ciphertext is fixed, and N plaintexts are correspondingly encrypted for each target ciphertext. As such, encryption efficiency is improved, and a quantity of ciphertexts that the first terminal needs to send to the second terminal is greatly reduced, thereby improving a data transmission volume and data transmission efficiency between the first terminal and the second terminal. In addition, N plaintexts are correspondingly encrypted for each target ciphertext. As such, when the second terminal performs an addition operation on the target ciphertexts, only one addition operation needs to be performed to complete a calculation amount in N addition operations that originally need to be performed, thereby greatly improving calculation efficiency of the second terminal. In the embodiments of this specification, the predetermined gap is further inserted between every two adjacent plaintexts, and then splicing and encryption are performed. This can effectively prevent a plaintext at a low-order bit position from overflowing in an addition process and affecting accuracy of a plaintext at an adjacent high-order bit position, thereby improving accuracy of calculation between ciphertexts.

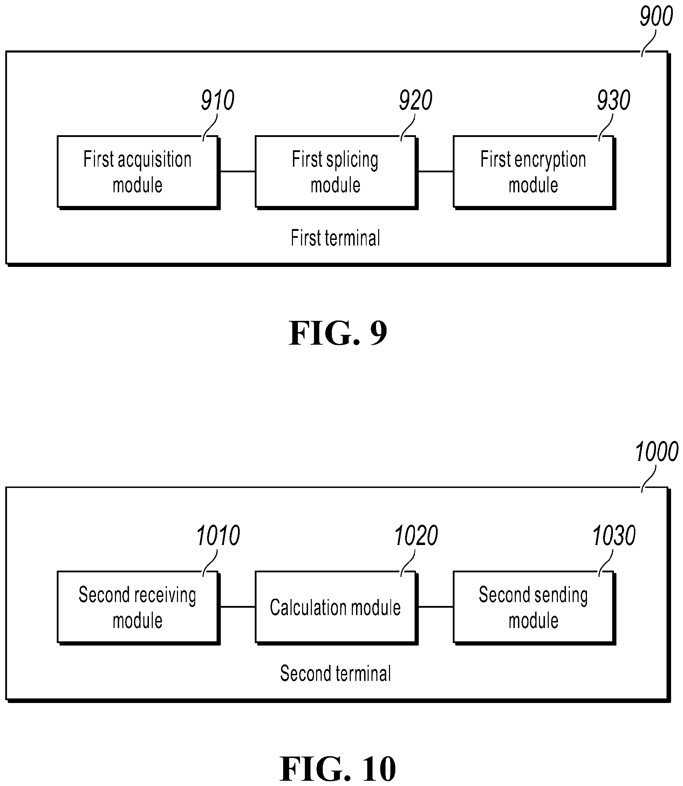

FIG. 9 is a schematic structural diagram illustrating a first terminal, according to one or more embodiments of this specification. The first terminal 900 includes the following: a first acquisition module 910, configured to obtain N first plaintexts, where N is a positive integer greater than or equal to 2; a first splicing module 920, configured to splice the N first plaintexts based on a first predetermined rule to obtain a first target plaintext; and a first encryption module 930, configured to encrypt the first target plaintext by using a predetermined encryption algorithm to obtain a first target ciphertext.

In a possible implementation, the N first plaintexts include signed integers.

The first terminal 900 further includes the following: a conversion module, configured to convert first plaintexts being the signed integers into corresponding complements.

The first splicing module 920 is specifically configured to splice the complements corresponding to the signed integers in the N first plaintexts based on the first predetermined rule to obtain the first target plaintext.

In a possible implementation, the N first plaintexts further include unsigned integers.

The first splicing module 920 is specifically configured to splice the complements corresponding to the signed integers in the N first plaintexts and the unsigned integers based on the first predetermined rule to obtain the first target plaintext.

In a possible implementation, the first splicing module 920 is specifically configured to splice the N first plaintexts based on a predetermined sequence to obtain the first target plaintext.

In a possible implementation, the first target plaintext includes the N first plaintexts and a predetermined gap between every two adjacent first plaintexts in the N first plaintexts, the predetermined gap includes d bits of predetermined numbers, and d is a positive integer.

In a possible implementation, all first plaintexts in the N first plaintexts have a same size.

In a possible implementation, the predetermined encryption algorithm is an addition homomorphic encryption algorithm.

The first terminal 900 further includes the following: a second acquisition module, configured to obtain M groups of second plaintexts, where M is a positive integer, each of the M groups of second plaintexts includes N second plaintexts, and the N second plaintexts are in one-to-one correspondence with the N first plaintexts; a second splicing module, configured to splice each group of the second plaintexts based on the first predetermined rule to obtain M second target plaintexts; a second encryption module, configured to encrypt the M second target plaintexts by using the predetermined encryption algorithm to obtain M second target ciphertexts; a first sending module, configured to send the first target ciphertext and the M second target ciphertexts to a second terminal; a first receiving module, configured to receive a third target ciphertext returned by the second terminal, where the third target ciphertext is a result of adding the first target ciphertext and the M second target ciphertexts; a decryption module, configured to decrypt the third target ciphertext to obtain a third target plaintext; and an interception module, configured to intercept the third target plaintext based on a second predetermined rule to obtain N results of correspondingly adding the N first plaintexts and the M groups of second plaintexts.

FIG. 10 is a schematic structural diagram illustrating a second terminal, according to one or more embodiments of this specification. The second terminal 1000 includes the following:

a second receiving module 1010, configured to receive a first target ciphertext and M second target ciphertexts that are sent by a first terminal, where the first target ciphertext includes N first plaintexts, N is a positive integer greater than or equal to 2, the M second target ciphertexts include M groups of second plaintexts, M is a positive integer, each of the M groups of second plaintexts includes N second plaintexts, and the N second plaintexts are in one-to-one correspondence with the N first plaintexts; a calculation module 1020, configured to add the first target ciphertext and the M second target ciphertexts to obtain a third target ciphertext, where the third target ciphertext is a result of adding the first target ciphertext and the M second target ciphertexts; and a second sending module 1030, configured to send the third target ciphertext to the first terminal.

Division of the modules in the first terminal and the second terminal is merely used as an example for description. In other embodiments, the first terminal and the second terminal each can be divided into different modules based on needs, to complete all or some functions of the first terminal and the second terminal. Various modules in the first terminal and the second terminal provided in the embodiments of this specification can be implemented in a form of a computer program. The computer program can be run on a terminal or a server. A program module including the computer program can be stored in a memory of the terminal or the server. When the computer program is executed by a processor, all or some steps of the batch encryption method described in the embodiments of this specification are implemented.

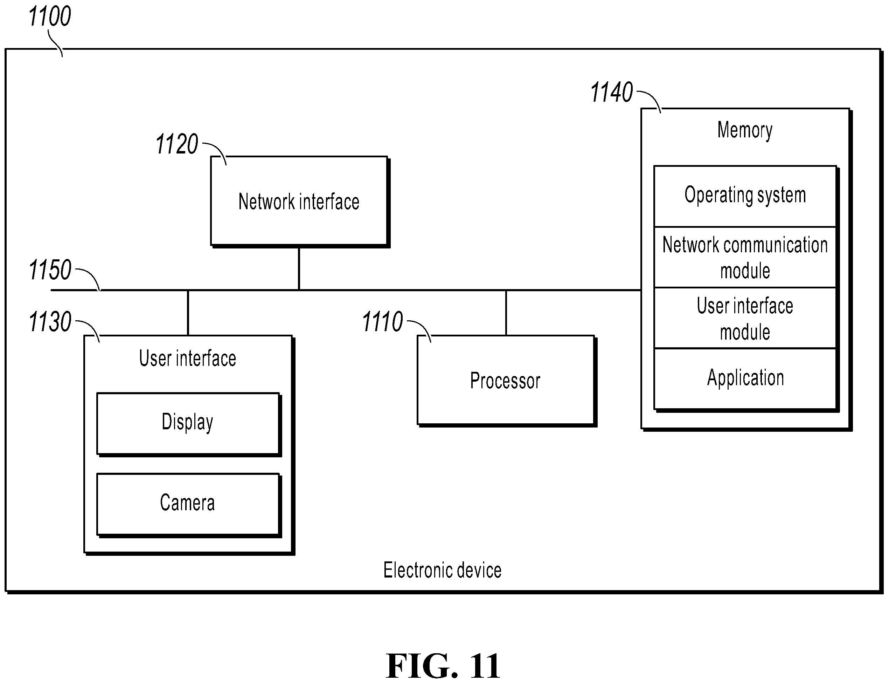

FIG. 11 is a schematic structural diagram illustrating an electronic device, according to one or more embodiments of this specification. As shown in FIG. 11, the electronic device 1100 can include at least one processor 1110, at least one network interface 1120, a user interface 1130, a memory 1140, and at least one communication bus 1150.

The communication bus 1150 can be configured to implement connection and communication between the components.

The user interface 1130 can include a display and a camera. Optionally, the user interface can further include a standard wired interface and a standard wireless interface.

Optionally, the network interface 1120 can include a Bluetooth module, a near field communication (NFC) module, a Wi-Fi module, etc.

The processor 1110 can include one or more processing cores. The processor 1110 is connected to each part of the entire electronic device 1100 by using various interfaces and lines, and performs various functions of the electronic device 1100 and data processing by running or executing the instructions, the program, the code set, or the instruction set that is stored in the memory 1140 and by invoking the data stored in the memory 1140. Optionally, the processor 1110 can be implemented in at least one hardware form in digital signal processing (DSP), a field-programmable gate array (FPGA), and a programmable logic array (PLA). The processor 1110 can integrate one or a combination of several of a central processing unit (CPU), a graphics processing unit (GPU), a modem, etc. The CPU mainly deals with an operating system, a user interface, an application, etc. The GPU is responsible for rendering and drawing content that needs to be displayed on a display. The modem is used to deal with wireless communication. It can be understood that the modem can be separately implemented by using one chip without being integrated into the processor 1110.

The memory 1140 can include a random access memory (RAM), or can include a read-only memory (ROM). Optionally, the memory 1140 includes a non-transitory computer readable medium. The memory 1140 can be configured to store instructions, a program, code, a code set, or an instruction set. The memory 1140 can include a program storage area and a data storage area. The program storage area can store instructions for implementing an operating system, instructions used for at least one function (such as obtaining a plaintext and sending a target ciphertext), instructions for implementing the previous various method embodiments, etc. The data storage area can store data in the previous various method embodiments etc. Optionally, the memory 1140 can be at least one storage apparatus located far from the processor 1110. As shown in FIG. 11, the memory 1140 used as a computer storage medium can include an operating system, a network communication module, a user interface module, and an application.

In some possible embodiments, the electronic device 1100 can be the previous first terminal. In the electronic device 1100 shown in FIG. 11, the user interface 1130 is mainly configured to provide an input interface for the user, for example, a button on the first terminal, to obtain an instruction triggered by the user. The processor 1110 can be configured to invoke the application stored in the memory 1140, and specifically perform the following operations: obtaining N first plaintexts, where N is a positive integer greater than or equal to 2; splicing the N first plaintexts based on a first predetermined rule to obtain a first target plaintext; and encrypting the first target plaintext by using a predetermined encryption algorithm to obtain a first target ciphertext.

In some possible embodiments, the N first plaintexts include signed integers.

After obtaining the N first plaintexts, and before splicing the N first plaintexts based on the first predetermined rule to obtain the target first plaintext, the processor 1110 is further configured to convert first plaintexts being the signed integers into corresponding complements.

When splicing the N first plaintexts based on the first predetermined rule to obtain the first target plaintext, the processor 1110 is specifically configured to splice the complements corresponding to the signed integers in the N first plaintexts based on the first predetermined rule to obtain the first target plaintext.

In some possible embodiments, the N first plaintexts further include unsigned integers.

When splicing the N first plaintexts based on the first predetermined rule to obtain the first target plaintext, the processor 1110 is specifically configured to splice the complements corresponding to the signed integers in the N first plaintexts and the unsigned integers based on the first predetermined rule to obtain the first target plaintext.

In some possible embodiments, when splicing the N first plaintexts based on the first predetermined rule to obtain the first target plaintext, the processor 1110 is specifically configured to splice the N first plaintexts based on a predetermined sequence to obtain the first target plaintext.

In some possible embodiments, the first target plaintext includes the N first plaintexts and a predetermined gap between every two adjacent first plaintexts in the N first plaintexts, the predetermined gap includes d bits of predetermined numbers, and d is a positive integer.

In some possible embodiments, all first plaintexts in the N first plaintexts have a same size.

In some possible embodiments, the method is applied to a first terminal, and the predetermined encryption algorithm is an addition homomorphic encryption algorithm.

The processor 1110 is further configured to obtain M groups of second plaintexts, where M is a positive integer, each of the M groups of second plaintexts includes N second plaintexts, and the N second plaintexts are in one-to-one correspondence with the N first plaintexts; splice each group of the second plaintexts based on the first predetermined rule to obtain M second target plaintexts; encrypt the M second target plaintexts by using the predetermined encryption algorithm to obtain M second target ciphertexts; send the first target ciphertext and the M second target ciphertexts to a second terminal; receive a third target ciphertext returned by the second terminal, where the third target ciphertext is a result of adding the first target ciphertext and the M second target ciphertexts; decrypt the third target ciphertext to obtain a third target plaintext; and intercept the third target plaintext based on a second predetermined rule to obtain N results of correspondingly adding the N first plaintexts and the M groups of second plaintexts.

In some possible embodiments, the electronic device 1100 can be the previous second terminal. In the electronic device 1100 shown in FIG. 11, the user interface 1130 is mainly configured to provide an input interface for the user, for example, a button on the second terminal, to obtain an instruction triggered by the user. The processor 1110 can be configured to invoke the application stored in the memory 1140, and specifically perform the following operations: receiving a first target ciphertext and M second target ciphertexts that are sent by a first terminal, where the first target ciphertext includes N first plaintexts, N is a positive integer greater than or equal to 2, the M second target ciphertexts include M groups of second plaintexts, M is a positive integer, each of the M groups of second plaintexts includes N second plaintexts, and the N second plaintexts are in one-to-one correspondence with the N first plaintexts; adding the first target ciphertext and the M second target ciphertexts to obtain a third target ciphertext, where the third target ciphertext is a result of adding the first target ciphertext and the M second target ciphertexts; and sending the third target ciphertext to the first terminal.

One or more embodiments of this specification further provide a computer-readable storage medium. The computer-readable storage medium stores instructions, and when the instructions are run on a computer or a processor, the computer or the processor is enabled to perform one or more steps in the previous embodiments. When each component module of the first terminal and the second terminal is implemented in the form of a software functional module and sold or used as an independent product, the module can be stored in the computer-readable storage medium.

The previous embodiments can be all or partially implemented by software, hardware, firmware, or any combination thereof. When the embodiments are implemented by software, the embodiments can be all or partially implemented in the form of a computer program product. The computer program product includes one or more computer instructions. When the previous computer program instructions are loaded and executed on a computer, the procedure or functions described based on the embodiments of this specification are all or partially generated. The computer can be a general-purpose computer, a dedicated computer, a computer network, or other programmable apparatuses. The computer instructions can be stored in a computer-readable storage medium or transmitted by using the computer-readable storage medium. The computer instructions can be transmitted from a website, computer, server, or data center to another website, computer, server, or data center in a wired (for example, a coaxial cable, an optical fiber, or a DSL) or wireless (for example, infrared, radio, or microwave) way. The computer-readable storage medium can be any usable medium accessible by a computer, or a data storage device, such as a server or a data center, integrating one or more usable media. The usable medium can be a magnetic medium (for example, a floppy disk, a hard disk, or a magnetic tape), an optical medium (for example, a digital versatile disc (DVD)), a semiconductor medium (for example, a solid-state drive (SSD)), etc.

A person of ordinary skill in the art can understand that all or some of the procedures of the method in the embodiments can be implemented by a computer program instructing related hardware. The program can be stored in a computer-readable storage medium. When the program is executed, the procedures of the method embodiments are performed. The storage medium includes any medium that can store program code, such as a ROM, a RAM, a magnetic disk, or an optical disc. The technical features in the embodiments and the implementation solutions can be randomly combined if they do not conflict with each other.

The previous embodiments are only intended for describing some embodiments of this specification other than limiting the scope of this specification. variations and improvements made by a person of ordinary skill in the art to the technical solutions of this specification without departing from the design spirit of this specification should fall within the protection scope determined by the appended claims.

Specific embodiments of this specification are described above. Other embodiments fall within the scope of the appended claims. In some situations, the actions or steps described in the claims can be performed in an order different from the order in the embodiments, and the desired results can still be achieved. In addition, the process depicted in the accompanying drawings does not necessarily need a particular execution order to achieve the desired results. In some implementations, multi-tasking and concurrent processing is feasible or can be advantageous.

Although the present invention is defined in the claims, it should be understood that the present invention can also (alternatively) be defined in accordance with the following embodiments:

1. A batch encryption method, wherein the method comprises:

obtaining N first plaintexts, wherein N is a positive integer greater than or equal to 2;
splicing the N first plaintexts based on a first predetermined rule to obtain a first target plaintext; and
encrypting the first target plaintext by using a predetermined encryption algorithm to obtain a first target ciphertext.

2. The method according to embodiment 1, wherein the N first plaintexts comprise signed integers;

after the obtaining N first plaintexts, and before the splicing the N first plaintexts based on a first predetermined rule to obtain a target first plaintext, the method further comprises:

converting first plaintexts being the signed integers into corresponding complements; and
the splicing the N first plaintexts based on a first predetermined rule to obtain a first target plaintext comprises:

splicing the complements corresponding to the signed integers in the N first plaintexts based on the first predetermined rule to obtain the first target plaintext.

3. The method according to embodiment 2, wherein the N first plaintexts further comprise unsigned integers; and

the splicing the N first plaintexts based on a first predetermined rule to obtain a first target plaintext comprises:
splicing the complements corresponding to the signed integers in the N first plaintexts and the unsigned integers based on the first predetermined rule to obtain the first target plaintext.

4. The method according to embodiment 1, wherein the splicing the N first plaintexts based on a first predetermined rule to obtain a first target plaintext comprises:
splicing the N first plaintexts based on a predetermined sequence to obtain the first target plaintext.

5. The method according to any one of embodiments 1 to 4, wherein the first target plaintext comprises the N first plaintexts and a predetermined gap between every two adjacent first plaintexts in the N first plaintexts, the predetermined gap comprises d bits of predetermined numbers, and d is a positive integer.

6. The method according to embodiment 1, wherein all first plaintexts in the N first plaintexts have a same size.

7. The method according to embodiment 1, wherein the method is applied to a first terminal, the predetermined encryption algorithm is an addition homomorphic encryption algorithm, and the method further comprises:

obtaining M groups of second plaintexts, wherein M is a positive integer, each of the M groups of second plaintexts comprises N second plaintexts, and the N second plaintexts are in one-to-one correspondence with the N first plaintexts; splicing each group of the second plaintexts based on the first predetermined rule to obtain M second target plaintexts; encrypting the M second target plaintexts by using the predetermined encryption algorithm to obtain M second target ciphertexts; sending the first target ciphertext and the M second target ciphertexts to a second terminal; receiving a third target ciphertext returned by the second terminal, wherein the third target ciphertext is a result of adding the first target ciphertext and the M second target ciphertexts; decrypting the third target ciphertext to obtain a third target plaintext; and intercepting the third target plaintext based on a second predetermined rule to obtain N results of correspondingly adding the N first plaintexts and the M groups of second plaintexts.

8. A batch encryption method, applied to a second terminal, wherein the method comprises:

receiving a first target ciphertext and M second target ciphertexts that are sent by a first terminal, wherein the first target ciphertext comprises N first plaintexts, N is a positive integer greater than or equal to 2, the M second target ciphertexts comprise M groups of second plaintexts, M is a positive integer, each of the M groups of second plaintexts comprises N second plaintexts, and the N second plaintexts are in one-to-one correspondence with the N first plaintexts; adding the first target ciphertext and the M second target ciphertexts to obtain a third target ciphertext, wherein the third target ciphertext is a result of adding the first target ciphertext and the M second target ciphertexts; and sending the third target ciphertext to the first terminal.

9. A first terminal, wherein the first terminal comprises:

a first acquisition module, configured to obtain N first plaintexts, wherein N is a positive integer greater than or equal to 2; a first splicing module, configured to splice the N first plaintexts based on a first predetermined rule to obtain a first target plaintext; and a first encryption module, configured to encrypt the first target plaintext by using a predetermined encryption algorithm to obtain a first target ciphertext.

10. The first terminal according to embodiment 9, wherein the predetermined encryption algorithm is an addition homomorphic encryption algorithm, and the first terminal further comprises:

a second acquisition module, configured to obtain M groups of second plaintexts, wherein M is a positive integer, each of the M groups of second plaintexts comprises N second plaintexts, and the N second plaintexts are in one-to-one correspondence with the N first plaintexts; a second splicing module, configured to splice each group of the second plaintexts based on the first predetermined rule to obtain M second target plaintexts; a second encryption module, configured to encrypt the M second target plaintexts by using the predetermined encryption algorithm to obtain M second target ciphertexts; a first sending module, configured to send the first target ciphertext and the M second target ciphertexts to a second terminal; a first receiving module, configured to receive a third target ciphertext returned by the second terminal, wherein the third target ciphertext is a result of adding the first target ciphertext and the M second target ciphertexts; a decryption module, configured to decrypt the third target ciphertext to obtain a third target plaintext; and an interception module, configured to intercept the third target plaintext based on a second predetermined rule to obtain N results of correspondingly adding the N first plaintexts and the M groups of second plaintexts.

11. A second terminal, wherein the second terminal comprises:

a second receiving module, configured to receive a first target ciphertext and M second target ciphertexts that are sent by a first terminal, wherein the first target ciphertext comprises N first plaintexts, N is a positive integer greater than or equal to 2, the M second target ciphertexts comprise M groups of second plaintexts, M is a positive integer, each of the M groups of second plaintexts comprises N second plaintexts, and the N second plaintexts are in one-to-one correspondence with the N first plaintexts;
a calculation module, configured to add the first target ciphertext and the M second target ciphertexts to obtain a third target ciphertext, wherein the third target ciphertext is a result of adding the first target ciphertext and the M second target ciphertexts; and
a second sending module, configured to send the third target ciphertext to the first terminal.

12. A batch encryption system, wherein the system comprises the first terminal according to embodiment 10 and the second terminal according to embodiment 11.

13. An electronic device, comprising a processor and a memory, wherein the processor is connected to the memory, and the memory is configured to store executable program code; and
the processor runs a program corresponding to the executable program code by reading the executable program code stored in the memory, to perform the method according to any one of embodiments 1 to 7 or embodiment 8.

14. A computer storage medium, wherein the computer storage medium stores a plurality of instructions, and the instructions are used by a processor to load and perform the steps of the method according to any one of embodiments 1 to 7 or embodiment 8.

15. A computer program product comprising instructions, wherein when the computer program product runs on a computer or a processor, the computer or the processor is enabled to perform the method according to any one of embodiments 1 to 7 or embodiment 8.

**Claims**

1.  A batch encryption method, wherein the method comprises:

    obtaining (202) N first plaintexts, wherein N is a positive integer greater than or equal to 2;
    splicing (204) the N first plaintexts based on a first predetermined rule to obtain a first target plaintext; and
    encrypting (206) the first target plaintext by using a predetermined encryption algorithm to obtain a first target ciphertext.

2.  The method according to claim 1, wherein the N first plaintexts comprise signed integers; after obtaining the N first plaintexts, and before splicing the N first plaintexts based on a first predetermined rule to obtain a target first plaintext, the method further comprises:

    converting first plaintexts being the signed integers into corresponding complements; and
    the splicing the N first plaintexts based on a first predetermined rule to obtain a first target plaintext comprises:
    splicing the complements corresponding to the signed integers in the N first plaintexts based on the first predetermined rule to obtain the first target plaintext.

3.  The method according to claim 2, wherein the N first plaintexts further comprise unsigned integers; and
    the splicing the N first plaintexts based on a first predetermined rule to obtain a first target plaintext comprises:
    splicing the complements corresponding to the signed integers in the N first plaintexts and the unsigned integers based on the first predetermined rule to obtain the first target plaintext.

4.  The method according to claim 1, wherein splicing the N first plaintexts based on a first predetermined rule to obtain a first target plaintext comprises:
    splicing the N first plaintexts based on a predetermined sequence to obtain the first target plaintext.

5.  The method according to any one of claims 1 to 4, wherein the first target plaintext comprises the N first plaintexts and a predetermined gap between every two adjacent first plaintexts in the N first plaintexts, the predetermined gap comprises d bits of predetermined numbers, and d is a positive integer.

6.  The method according to any one of claims 1 to 5, wherein all first plaintexts in the N first plaintexts have a same size.

7.  The method according to claim 1, wherein the method is applied to a first terminal, the predetermined encryption algorithm is an addition homomorphic encryption algorithm, and the method further comprises:

    obtaining M groups of second plaintexts, wherein M is a positive integer, each of the M groups of second plaintexts comprises N second plaintexts, and the N second plaintexts are in one-to-one correspondence with the N first plaintexts;

splicing each group of the second plaintexts based on the first predetermined rule to obtain M second target plaintexts;

encrypting the M second target plaintexts by using the predetermined encryption algorithm to obtain M second target ciphertexts;

sending the first target ciphertext and the M second target ciphertexts to a second terminal;

receiving a third target ciphertext returned by the second terminal, wherein the third target ciphertext is a result of adding the first target ciphertext and the M second target ciphertexts;

decrypting the third target ciphertext to obtain a third target plaintext; and

intercepting the third target plaintext based on a second predetermined rule to obtain N results of correspondingly adding the N first plaintexts and the M groups of second plaintexts.

8. The method according to claim 7, the method further comprising:

a batch encryption method, applied to a second terminal comprising:

receiving the first target ciphertext and the M second target ciphertexts that are sent by the first terminal, wherein the first target ciphertext comprises the N first plaintexts, N is a positive integer greater than or equal to 2, the M second target ciphertexts comprise M groups of second plaintexts, M is a positive integer, each of the M groups of second plaintexts comprises N second plaintexts, and the N second plaintexts are in one-to-one correspondence with the N first plaintexts;

adding the first target ciphertext and the M second target ciphertexts to obtain a third target ciphertext, wherein the third target ciphertext is a result of adding the first target ciphertext and the M second target ciphertexts; and

sending the third target ciphertext to the first terminal.

9. An electronic device, comprising a processor and a memory, wherein the processor is connected to the memory, and the memory is configured to store executable program code; and

the processor runs a program corresponding to the executable program code by reading the executable program code stored in the memory, to perform the method according to any one of claims 1 to 7.

10. A computer program product comprising instructions, wherein when the computer program product runs on a computer or a processor, the computer or the processor is enabled to perform the method according to any one of claims 1 to 8.

**FIG. 1**

Obtain N first plaintexts — 202

Splice the N first plaintexts based on a first predetermined rule to obtain a first target plaintext — 204

Encrypt the first target plaintext by using a predetermined encryption algorithm to obtain a first target ciphertext — 206

**FIG. 2**

**FIG. 3A**

**FIG. 3B**

| k (bit) | p (bit) | d (bit) | Maximum value of N |
|---------|---------|---------|--------------------|
| 2048 | 16 | 8 | 28 |
| 2048 | 32 | 16 | 14 |
| 2048 | 64 | 0 | 10 |
| 2048 | 64 | 16 | 8 |

# FIG. 4

# FIG. 5A

**FIG. 5B**

First terminal

Second terminal

608 — Obtain M groups of second plaintexts

602 — Obtain N first plaintexts

610 — Splice each group of the second plaintexts based on the first predetermined rule to obtain M second target plaintexts

604 — Splice the N first plaintexts based on a first predetermined rule to obtain a first target plaintext

Encrypt the M second target plaintexts by using the predetermined encryption algorithm to obtain M second target ciphertexts

606 — Encrypt the first target plaintext by using a predetermined encryption algorithm to obtain a first target ciphertext

612

614 — Send the first target ciphertext and the M second target ciphertexts to the second terminal

616 — Receive the first target ciphertext and the M second target ciphertexts that are sent by the first terminal

618 — Add the first target ciphertext and the M second target ciphertexts to obtain a third target ciphertext

620 — Send the third target ciphertext to the first terminal

622 — Receive the third target ciphertext returned by the second terminal

624 — Decrypt the third target ciphertext to obtain a third target plaintext

626 — Intercept the third target plaintext based on a second predetermined rule to obtain N results of correspondingly adding the N first plaintexts and the M groups of second plaintexts

**FIG. 6**

710 721 720

| First plaintext | | Second plaintext | |
|---|---|---|---|
| First plaintext | 01010100 | Second plaintext | 10010111 |
| First plaintext | 00101010 | Second plaintext | 01111111 |

711

712

722

## FIG. 7

820

Intercept → 11101011

Position 1

810 → 11101011 0000 11101001

Position 2

Intercept → 11101001

830

## FIG. 8

*900*

```
┌──────────────────────────────────────────────────────────────────┐
│                                                                    │
│      910                    920                    930              │
│  ┌──────────────┐     ┌──────────────┐     ┌──────────────┐        │
│  │    First     │     │    First     │     │    First     │        │
│  │ acquisition  │─────│  splicing    │─────│  encryption  │        │
│  │   module     │     │   module     │     │   module     │        │
│  └──────────────┘     └──────────────┘     └──────────────┘        │
│                                                                    │
│                         First terminal                             │
└──────────────────────────────────────────────────────────────────┘
```

# FIG. 9

*1000*

```
┌──────────────────────────────────────────────────────────────────┐
│                                                                    │
│      1010                   1020                   1030            │
│  ┌──────────────┐     ┌──────────────┐     ┌──────────────┐        │
│  │    Second    │     │              │     │    Second    │        │
│  │  receiving   │─────│ Calculation  │─────│   sending    │        │
│  │   module     │     │   module     │     │   module     │        │
│  └──────────────┘     └──────────────┘     └──────────────┘        │
│                                                                    │
│                        Second terminal                             │
└──────────────────────────────────────────────────────────────────┘
```

# FIG. 10

**FIG. 11**

Europäisches
Patentamt

European
Patent Office

Office européen
des brevets

# EUROPEAN SEARCH REPORT

**Application Number**

EP 23 16 8141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/198601 A1 (LAINE KIM HENRY MARTIN [US] ET AL) 12 July 2018 (2018-07-12) <br> * figure 2 * <br> * figure 3 * <br> * paragraph [0023] * <br> * paragraph [0035] * <br> * paragraph [0039] * <br> * paragraph [0043] * <br> ----- | 1-10 | INV. <br> H04L9/00 <br> G06F21/60 <br> H04L9/40 |
| X | US 2018/278410 A1 (HIRANO TAKATO [JP] ET AL) 27 September 2018 (2018-09-27) <br> * figure 1 * <br> * figure 5 * <br> * figure 9 * <br> * paragraph [0065] * <br> * paragraph [0174] - paragraph [0180] * <br> * paragraph [0202] * <br> ----- | 1-10 | |
| A | JAJODIA SUSHIL ET AL: "Numerical SQL Value Expressions Over Encrypted Cloud Databases", 11 August 2015 (2015-08-11), 20150811, PAGE(S) 455 - 478, XP047645136, [retrieved on 2015-08-11] <br> * Section 2.2. * <br> * Section 2.3. * <br> * Section 3.1. * <br> ----- | 1-10 | |
| | | | TECHNICAL FIELDS SEARCHED (IPC) <br><br> H04L <br> G06F |

The present search report has been drawn up for all claims

| Place of search | Date of completion of the search | Examiner |
|---|---|---|
| Munich | 24 July 2023 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8141

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2023

| Patent document cited in search report | | Publication date | Patent family member(s) | | | Publication date |
|---|---|---|---|---|---|---|
| US 2018198601 | A1 | 12-07-2018 | NONE | | | |
| US 2018278410 | A1 | 27-09-2018 | CN | 108140334 | A | 08-06-2018 |
| | | | EP | 3361469 | A1 | 15-08-2018 |
| | | | JP | 5985123 | B1 | 06-09-2016 |
| | | | JP | WO2017061024 | A1 | 05-10-2017 |
| | | | US | 2018278410 | A1 | 27-09-2018 |
| | | | WO | 2017061024 | A1 | 13-04-2017 |

EPO FORM P0459

For more details about this annex : see Official Journal of the European Patent Office, No. 12/82